# EUROPEAN PATENT APPLICATION

(11) **EP 0 851 386 A2**
(43) Date of publication of application: **01.07.1998**
(21) Application number: 97122934.9
(22) Date of filing: 29.12.1997
(51) Int. Cl.: G06K 17/00

(54) **System and method of communication for data identification systems**

(30) Priority: 30.12.1996 IT MI962755
(71) Applicant: IDR di Venturini M., 20099 Sesto S. Giovanni, (MI) (IT)
(72) Inventor: Melzi,Umberto, 20099 Sesto S. Giovanni Milano (IT)

(57) **Abstract**

Communication system comprising at least a first communication terminal substantially portable, at least a second communication terminal substantially fixed, able to communicate with said at least a first terminal, control means of said communication system connected to said at least second terminal, a computer system for data collection substantially fixed, a communication interface between said control means and said computer system, characterized by the fact that to said at least first terminal it is possible to connect an identification data terminal.

## Description

This invention refers to a modular and functional communication method and system for data identification systems. In particular refers to a data identification communication system.

Among the identification data systems the most known is the bar code. The identification system of products using the bar code is today a realty which can be meet every day. In particular it has had a great diffusion to facilitate the management and marketing of department stores and of distribution centres. The same system has also had great diffusion in industrial and storage environment.

The bar code system forces the reading of the code on the items and then the transmission of the information to the computer systems of the material management in a safe and speedy way. In particular from places more and more unthinkable and far away from the computer systems. To be noted that the cable information transmission results binding, and however it is not to be completely undervalued in particular cases.

It has become important the transmission of this information by radio.

Some dedicate radio systems are known, but they require government licenses to be used, they are not flexible and are very expensive. They use analogic transmission systems which can have transmission problems because they are not very correct and clear data, they are hardly expandable and they do not bear high density use.

The first aim of this invention is thus to provide a system without the drawback of the known state of the art in particular of all those of the above mentioned systems.

According to the invention a modular communication system is now available.

It may be expandable in the number of its terminals and in the type of services.

According to a first aspect of the invention this aim is achieved by a communication system comprising:
- at least a first substantially portable communication terminal,
- at least a second substantially fixed communication terminal, able to communicate to said at least a first terminal,
- control means of said communication system connected to said at a least second terminal,
- a computer system for data collection substantially fixed,
- a communication interface between those control means and said computer system,
   characterized by the fact that to said at least a first terminal it is possible to connect an data identification terminal.

In particular to said at least a first terminal it is possible connect a vocal terminal.

Advantageously said communication system is by radio, it is bi-directional; it is digital; it is connectable to the public telephone network; it uses a TDMA (Time Division Multiplex Access) communication system.

More advantageously it uses a DECT (Digital European Cordless Telecommunication) communication system.

Preferably said at least a first terminal is connected to said identification data terminal by an interface circuit; in particular said interface circuit is comprising an interface according to RS 232 standard.

In a preferably way to said at least a first terminal it is possible to connect a bar code reading terminal (BARCODE).

In a preferably way to said at least a first terminal it is possible to connect a magnetic band reading terminal (POS).

In a preferably way to said at least a first terminal it is possible to connect an inductive chip reading terminal (TAG).

Moreover said computer system comprises a computer.

According to a second aspect of the information this aim is achieved by a communication method comprising the phases of:
- transmitting information among a plurality of substantially portable terminals and a substantially fixed terminal connected to a communication control system;
- transferring this information to a computer system characterized by the fact that to said plurality of substantially portable terminals it is possible to connect an identification data system.

Preferably said communication system comprises the phase of transmitting information from said information system to said plurality of substantially portable terminals.

According to a third aspect of the invention, this aim is achieved by a communication terminal comprising
- a trasmitting\receiving module
- an interface module connected to said trasmitting\receiving module characterized by the fact that to said interface module it is possible to connect an identification data module.

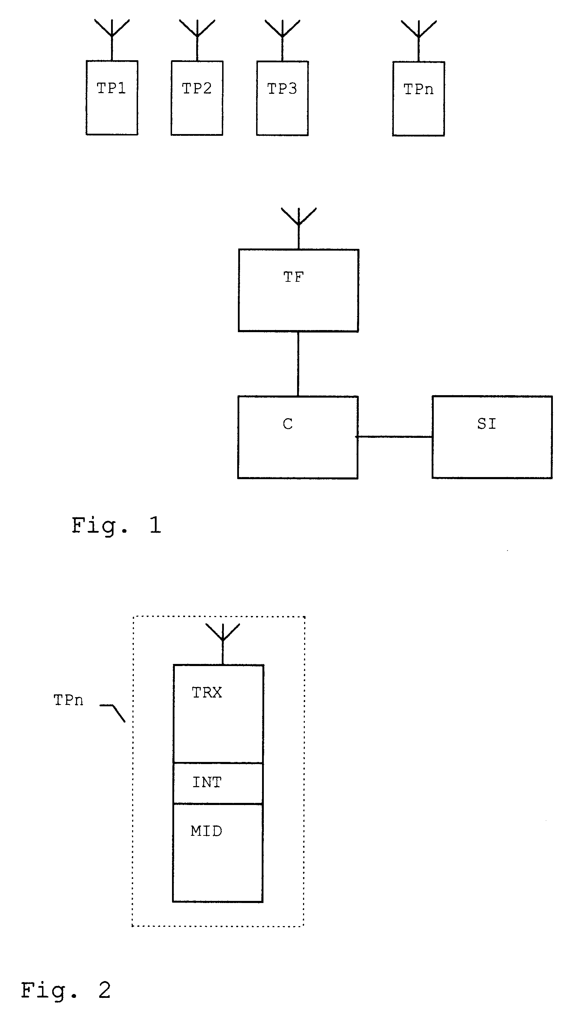

This invention will result clearer from the present description of its not restrictive embodiment considered together with the figures in which it is shown in figure 1 a communication system according to the invention; in figure 2 the block diagram of the portable terminals TP1..TPn according to the present invention. In figure 1 a plurality of portable terminals is shown with references from TP1 to TPn.

They have been defined portable terminal since their first function is to be portable, movable and of restrained dimensions, but they can also be used fixed on some pre-existing structure or created for them.

Those terminals TP1..TPn show the characteristics of being connected to integrated elements of different functions so to have an integrated communication system as it will be described in a detailed way later on.

These terminals TP1..TPn are able to communicate to a fixed terminal TF.

In figure 1 the system is represented so that the connection is by radio as the applicant thinks it represents a preferable form of the system according to the invention. But the applicant also thinks that the connection by cable represents a satisfying solution in particular cases. For instance in not extremely large spaces.

The control means C are connected to the terminal TF. Those control means C manage the communications among the terminals TP1..TPn and the terminal TF.

To those control means C a switching traffic function is normally associated (PBX).

In the case of a cable connection system those control means are simple circuits.

In the case of a radio connection system those control means C are more complex circuits but always known and within the construction of skilled in the art.

To the control means C a computer system SI is connected. This computer system is preferably built up by a computer (PC) capable of acquiring, asking and sending data to terminals TP1..TPn by the TF terminal. The computer system SI thus works out those data for the desired use.

A feature of the communication system according to the invention are the terminals TP1..TPn for their modularity. Each of them, as it is represented in figure 2 includes a TRX module capable of transmitting and receiving.

In a preferable embodiment of the system according to the invention the transmission and the reception is by cable, and according to the more favourite way is by radio. That module TRX is connected to an interface module INT which permits to the TRX module to present a connection system common to the entire system. In a favourite embodiment that interface is according to the standard RS232 that is a serial bi-directional interface.

However it is possible to use any type of interface. The advantage of having only a type of interface inside a communication system according to the invention and also among the different communication systems is the fact that is possible interchange a TRX module with another one without any difficulty.

To the interface module INT it is possible to connect any module which we wish to connect to the system, which has that interface. In particular it is possible to connect an identification data module MID. Among the connectable modules MID there is a bar code system, the POS (point of sale) system, the TAG system described in a more detailed way later on. It is also possible to connect a vocal module, to permit a conversation within the communication system.

The TF terminal can be connected to the public telephone network so as to permit the communication among the TP1..TPn terminal and the external subscriber to the communication system according to the invention.

The bar code laser reader takes advantage of the laser technology to measure the bar thickness and the spaces between a bar and the other by a mobile laser light point with scannings which goes from a minimum of 38 scannings a minute to more than 3000 scannings a minute. The ray light reflected is received by a special circuit which transforms it into an electric signal. By an other circuit which usually is inside the same equipment the electric signal is decodified and transformed in a special code suitable for the following transmission and interpretation.

There are also some CCD (Charge Coupled Device) readers which instead of having a mobile light point it is the same decoding system which moves. In practice it is a videocamera which receives the image which is scanned to read the information.

The inductive bearing system is in the identification system the last put on the market for data gathering. It takes advantage of a capsule called TAG (button) which accepts an electronic data transcription regarding its identification and the information which will be needed in the future.

The dialogue between the reader and the TAG occurs with an appropriate radio circuit.

There are also magnetic band readers as the so called POS (point of sale). The magnetic system uses writing on a magnetic track, usually put on a plastic support or a paper support if cheap, where the data are registered and then read by special skimming readers as they were usually magnetic readers/recorders.

The radio connection of the system according to the invention can be effected in different ways. According to a favourite embodiment of the invention it uses a TDMA communication system, digital and bi-directional.

In particular it uses the European system DECT, described in the European Standard ETS 300 175-1-9.

The DECT system is a cellular system with cells having a cell up to 50 m indoor and up to 250 m outdoor.

It operates in the frequency band from 1880 MHz to 1900 MHz, therefore with a band width of 20 MHz. This band width has been divided into 10 radiofrequency carriers, with a spacing between a channel to the other of 1.728 MHz. Those channels can carry voices or data at the frequency of 1.152 MHz.

It is a TDMA system, so each channel has been divided in temporal spaces of 10 ms, that is 24 time slots The first 12 are used for the transmission in a direction and the second 12 are for the opposite direction transmission. At each time slot of the first 12 it is associated a time slot among the second 12, so as to permit a full duplex or bi-directional communication. The assignment of the coupled pair of time slot to one of the ten radio carrier is effected in a dynamic way, following a choice, of the best available channel effected by the two stations which we wish to connect.

With 10 carriers and 24 time slots it is possible to create 12 bi-directional channels for carrier.

The radio interface between the terminals TP1..TPn and the terminal TF can also be non standard or according to the GAP (Generic Access Profile) both able to operate with DECT.

The TPn terminal can be of a simple type that is connected to only one of the data identification systems or to a vocal module, or of a complex type that is one or more combination described above. Besides it is possible to question, by a dedicated keyboard equipped on the terminal TPn, the computer system SI which sends the reply on a display equipped on the same terminal TPn.

Preferably it is possible to connect to the terminal TP1..TPn a vocal module. The vocal module comprises a telephone system having a connection forward the outside which is able to communicate in a digital way by an interface INT common to the system. Such a module allows a telephone communication to the other terminals TP1..TPn connected to a vocal module.

In this way the operator, possibly dislocated far away from the operating centre besides acquiring data by a terminal TP1..TPn can also talk to the operating centre or to anybody else. It is also possible to communicate from the operative centre to the operators displaced so as to be able of gathering in the best possible way.

If the fixed terminal TF is also connected to the public telephone network it is also possible to communicate from anyone of the terminal TP1..TPn connected to a vocal module to any subscriber of that network.

It is also possible in a preferred embodiment match to the same terminal TP a data identification module and a vocal module.

It is thought that the integration of a data identification system with the vocal modules it is of great interest for the market and that it satisfied a need that has been felt in this field for a long time.

Besides the fixed terminal has been connected to the public telephone network it is possible to reach a very high integration level and a high efficiency.

According to the invention it has been possible to identify with appropriate names the system.

With IDCELL it is possible to identify a data identification system which uses the DECT communication system according to the invention.

With POSCELL it is possible to identify a POS system which uses the DECT communication system according to the invention.

With BARCELL it is possible identify a barcode system which uses the DECT communication system according to the invention.

With TAGCELL it is possible identify a TAG system which uses the DECT communication system according to the invention.

The POSCELL, BARCELL and TAGCELL systems are the specific systems which are comprised in the integrated system IDCELL always according to this invention.

A system according to the present invention allows the access to the public network. It has a digital radio transmitting/receiving and therefore of high quality. It is efficient and it has a high traffic capability. It uses a free radio frequency so it is not necessary any government licence claim. Besides the data transmission permits the voice transmission.

Details of the devices used in the system according to the invention and also their connections are not described in the description as they are well known by the skilled in the art. Even if this invention has been described with reference to a specific embodiment, it is to keep in mind that it is not limited to these described embodiments and illustrated being susceptible to numerous variations which will show themselves to the skilled of the art and which must be considered part of the protection of the enclosed claims.

## Claims

1. Communication system comprising:
- at least a first communication terminal substantially portable,
- at least a second communication terminal substantially fixed, able to communicate to said at least a first terminal,
- control means of said communication system connected to said at least second terminal,
- a computer system for data collection substantially fixed,
- a communication interface between those control means and said computer system,
characterized by the fact that to said at least a first terminal it is possible to connect an identification data terminal.

2. Communication system according to claim 1 characterized by the fact that to said at least a first terminal it is possible connect a vocal terminal.

3. Communication system according to claim 1 characterized by the fact that said communication system is by radio.

4. Communication system according to claim 1 characterized by the fact that said communication system is bi-directional.

5. Communication system according to claim 1 characterized by the fact that said communication system is digital.

6. Communication system according to claim 1 characterized by the fact that said communication system is connectable to the public telephone network

7. Communication system according to claim 1 characterized by the fact that said communication system uses a TDMA (Time Division Multiplex Access) communication system.

8. Communication system according to claim 1 characterized by the fact that said communication system uses a DECT (Digital European Cordless Telecommunication) communication system.

9. Communication system according to claim 1 characterized by the fact that said at least a first terminal is connected to said identification data terminal by an interface circuit.

10. Communication system according to claim 1 characterized by the fact that said interface circuit is comprising an interface according to RS 232 standard.

11. Communication system according to claim 1 characterized by the fact that said identification data terminal comprises a BARCODE terminal.

12. Communication system according to claim 1 characterized by the fact that said identification data terminal comprises a POS terminal.

13. Communication system according to claim 1 characterized by the fact that said identification data terminal comprises a TAG terminal.

14. Communication system according to claim 1 characterized by the fact that said computer system includes a computer.

15. Communication method comprising the phases of:
- transmitting information between a plurality of substantially portable terminals and a substantially fixed terminal connected to a communication control means;
- transferring this information to a computer system characterized by the fact that to said plurality of substantially portable terminals it is possible to connect an identification data system.

16. Communication method according to claim 15 characterized by the fact of comprising the phase of transmitting information from said computer system to said plurality of substantially portable terminal.

17. Communication terminal comprising:
- a trasmitting\receiving module
- an interface module connected to said trasmitting\receiving module
characterized by the fact that to said interface module it is possible to connect a data identification module.
